# FASCICULE DE BREVET EUROPEEN

(11) **EP 4 291 476 B1**
(45) Date de publication et mention de la délivrance du brevet: **27.08.2025**
(21) Numéro de dépôt: 22708991.9
(22) Date de dépôt: 14.02.2022
(51) Int. Cl.: B62K 25/24

(54) **DISPOSITIF DE SUSPENSION POUR ROUE AVANT DIRECTRICE DE TYPE MONO-PIVOT ÉQUIPÉ D'UNE BIELLETTE DE COUPLE ET D'UN SUPPORT D'ÉTRIER SPÉCIFIQUE PERMETTANT LE MONTAGE D'ÉLÉMENTS STANDARDS**
EINZELGELENKAUFHÄNGUNGSVORRICHTUNG FÜR VORDERRADLENKUNG MIT DREHMOMENTVERBINDUNG UND SPEZIFISCHEM SATTELTRÄGERELEMENT ZUR MONTAGE VON STANDARDELEMENTEN
SINGLE PIVOT SUSPENSION DEVICE FOR FRONT STEERING WHEEL, THE DEVICE BEING PROVIDED WITH A TORQUE LINK AND A SPECIFIC CALIPER SUPPORT MEMBER FOR MOUNTING STANDARD ELEMENTS

(30) Priorité: 14.02.2021 FR 2101394
(43) Date de publication de la demande: 20.12.2023
(73) Titulaire: Newtton, 01480 Fareins (FR)
(72) Inventeur: ALFANO, Matthieu, 01480 FAREINS (FR)
(74) Mandataire: IP Trust
(86) Numéro de dépôt international: PCT/FR2022/050264
(87) Numéro de publication internationale: WO 2022/171968

(56) Documents cités:
- DE-U1- 29 606 900
- FR-A1- 2 878 495
- FR-A1- 3 037 865

## Description

### DOMAINE TECHNIQUE DE L'INVENTION

L'invention concerne le domaine des suspensions de véhicules, et notamment la suspension des roues avant directrices, pour les motos, les cycles, les deux-roues et équivalents.

L'invention concerne plus particulièrement un dispositif permettant l'utilisation d'une architecture de suspension de type « mono-pivot avec biellette de couple » tout en conservant un montage standard de la roue et de l'étrier de frein, en améliorant la compacité du système complet, en diminuant le nombre de pièces et en optimisant le chemin des efforts dans chaque pièce.

### ETAT DE LA TECHNIQUE

Les suspensions avant de cycle sont principalement de type télescopique. Cette technologie, parfaitement maitrisée depuis de longue date présente cependant des limites intrinsèques. En effet, les liaisons glissières cylindriques (cylindrique circulaire droit), qui permettent le télescopage, sont incapables de transmettre des efforts de guidage (i.e. de torsion selon l'axe de la colonne de direction du cycle), ce qui demande nécessairement deux jambages reliés entre eux et de diamètres conséquents, limitant ainsi le gain de masse possible. Ces liaisons glissières présentent de plus des frottements de fonctionnement qu'il est impossible de supprimer totalement, néfastes pour les performances de confort et d'adhérence de la suspension ainsi qu'une usure inévitable de ces éléments qui mène à une prise de jeu du système.

Il est possible de pallier ces problèmes en développant des suspensions s'appuyant sur des liaisons pivots et non glissières. Une liaison pivot a l'avantage de présenter un unique degré de liberté. Elle autorise donc le mouvement dans une seule direction (rotation selon son axe), et transmet les efforts dans toutes les autres directions. Ce type de liaison est idéal pour la conception d'une suspension dont sa cinématique doit in fine présenter un unique degré de liberté. De plus, il existe un grand nombre d'éléments standards de liaison pivot, permettant des choix de conception variés selon différents requis (masse, fiabilité, frottement, coût, raideur, etc.). Les suspensions conçues à partir de ces éléments de liaison pivot (parfois partiellement associés à des liaisons rotule si la transmission de couple n'est pas nécessaire) sont dites « articulées ». Il existe un grand nombre de fourches articulées, dont la conception la plus simple est le « mono-pivot ». La cinématique mono-pivot s'appuie sur l'utilisation d'une seule pièce appelée basculeur ou bras oscillant, assurant la liaison entre la roue et le châssis du cycle par un unique pivot. La trajectoire de la roue (par rapport au châssis du cycle) est donc un arc de cercle. L'Elément élastique (nécessairement présent sur toute suspension et nommé ressort), ainsi que l'élément dissipatif (présent à partir d'un certain niveau de gamme et généralement appelé amortisseur), ou l'ensemble de ces deux éléments (que l'on nommera Amortisseur par soucis de simplicité dans la suite du document) est positionné entre le basculeur et le Châssis de fourche. Il existe deux types de cinématique mono-pivot, celle dont le point de pivot principal (l'Axe O) est situé derrière l'Axe de roue (i.e. entre l'axe de roue avant et l'axe de roue arrière), que l'on nommera cinématique mono-pivot « à basculeur avant », et celle dont l'Axe O est situé devant l'Axe de roue que l'on nommera cinématique mono-pivot « à basculeur arrière ». Notons que, quelques soient les technologies utilisées, l'axe de roue est toujours décalé vers l'avant par rapport à l'axe de la douille de direction du châssis (cadre) dans le but d'obtenir une chasse positive nécessaire à la stabilité dynamique du véhicule. Dans le cas d'une cinématique de type « basculeur arrière », l'Axe O devant l'Axe de roue implique des pièces plus grandes et un porte-à-faux supplémentaire qui ne va pas dans le sens de l'optimisation. Le but de l'invention étant d'optimiser ce type de suspension, nous nous intéressons ici uniquement à la cinématique mono-pivot de type « basculeur avant » qui est intrinsèquement plus compacte. De façon générale, la cinématique mono-pivot est limitative en termes de géométrie (trajectoire, déport de roue, chasse, etc.) mais son extrême simplicité de conception présente des avantages considérables en termes de fiabilité, de masse, de confort et d'adhérence (grâce à l'utilisation possible de roulement sans frottement), de guidage (rigidité en torsion) ou encore de coût de production. Cependant, si cette cinématique mono-pivot est largement utilisée pour la suspension arrière, elle ne l'est pas aujourd'hui pour les suspensions avant car un phénomène intrinsèque la rend alors quasiment inutilisable. En effet, la cinématique présentant une unique pièce de liaison entre la roue et le châssis, le système de freinage (qui doit nécessairement être lié à la roue) est nécessairement lui aussi fixé à cet élément (le Basculeur). Lors du freinage, le couple de freinage est alors directement retransmis au Basculeur qui induit une compression ou une détente non contrôlée de la suspension (selon la position de l'axe de rotation du Basculeur) qui détériore grandement son fonctionnement. Pour une suspension arrière, les efforts de freinage sont faibles et le basculeur peut « naturellement » être positionné de telle sorte que le bras de levier agissant sur la compression de la suspension est faible. Mais pour une suspension avant, ce phénomène est tellement important qu'il la rend quasiment inutilisable. Cela est dû d'une part à la puissance de freinage très supérieure sur la roue avant par rapport à la roue arrière, et d'autre part à l'impossibilité de placer le point de rotation du basculeur suffisamment loin de l'axe de roue, pour des raisons d'encombrement, d'inertie (lié au guidage) et de design.

Document DE29606900U1 montre le préambule de la revendication 1.

Une solution connue consiste à ne plus lier directement le système de frein au Basculeur mais de le relier d'une part à l'axe de roue via une liaison pivot, et d'autre part au Châssis par l'intermédiaire d'une Biellette dite « de couple ». Le couple de freinage n'est alors plus retransmis au Basculeur. Le principe a été utilisé sur certaines motos entre les années 1960 et 1980. Les systèmes de frein de l'époque étaient de type Tambour. Le système de frein était donc « naturellement » installé autour de l'axe de roue et l'adaptation d'une Biellette de couple reliant ce système au Châssis était aisé. Lorsque les freins à disque se sont généralisés, il aurait été trop coûteux de développer un étrier spécifique venant se fixer sur l'axe de roue (les étriers standards se fixent sur le Châssis et non sur l'axe de roue). De plus, la liaison elle-même entre la roue et la suspension n'aurait pas été standard. Cette technologie non standard n'a donc pas survécu, laissant l'ensemble du marché aux fourches télescopiques. Aujourd'hui, il n'existe plus aucune suspension avant mono-pivot sur le marché du deux-roues.

### EXPOSE DE L'INVENTION

Le dispositif selon l'invention permet la conception d'une suspension de roue avant directrice de type mono-pivot à « basculeur avant » avec Biellette de couple, compatible avec un montage standard de la roue et du système de frein.

De plus, le dispositif selon l'invention permet d'optimiser la position, l'agencement et le nombre de pièces de la suspension, permettant des gains significatifs en termes de masse, de fiabilité, de coût de production et d'intégration.

Pour cela, le dispositif selon l'invention comporte une première pièce rigide, appelée Châssis de fourche, reliée au châssis du cycle (ou cadre) au niveau de la colonne de direction de ce dernier par une liaison pivot standard qui assure le degré de liberté nécessaire à la transmission des mouvements de guidage du véhicule, et une deuxième pièce rigide, appelée Basculeur, reliée d'une part au Châssis de fourche par une liaison pivot dont l'axe de rotation est parallèle à l'axe de rotation de la roue (appelé plus loin Axe de roue) et situé à l'arrière de ce dernier (i.e. vers la roue arrière), et d'autre part à la Roue via une liaison de type encastrement. La roue possède bien sûr son propre système de rotation, le moyeu. C'est ce dernier qui est lié via une liaison encastrement au Basculeur, et c'est lui qui assure la rotation de la partie mobile de la roue. Par soucis de simplicité, on parlera uniquement de la Roue dans la suite du document et non de ses éléments (moyeu, jante, etc.), sans oublier que la Roue assure elle-même sa rotation. De plus, « l'Axe de roue » désignera l'axe géométrique, i.e. une direction et un positionnement et non la pièce de serrage utilisée pour lier la Roue et le basculeur. On note que la liaison pivot entre le Châssis de fourche et le Basculeur (dont on nommera l'axe géométrique « Axe O » dans la suite du document) est suffisante pour parfaitement définir la cinématique de la Roue, i.e. son déplacement. C'est pour cela qu'on la nomme « cinématique mono-pivot ». La trajectoire de la roue est un arc de cercle compris dans un plan normal à l'Axe de roue. On note de plus que cette cinématique peut présenter soit un unique bras, la Roue étant reliée au Basculeur d'un seul côté (on parle alors de fourche mono-bras), soit deux bras, la Roue étant reliée par ses deux côtés. Dans le deuxième cas, le Basculeur peut être soit unique et présenter lui-même deux bras (un de chaque côté de la Roue), soit double, on parlera alors de basculeur gauche et de basculeur droit. L'Axe O pourra être réalisé par un ou plusieurs pivots concentriques, appartenant ou non aux mêmes Basculeurs. Ces différentes « architectures » potentielles n'ont aucune influence sur la cinématique et le fonctionnement de la présente invention. Dans la suite du document, on se concentrera donc sur le côté présentant le système de freinage et on ignorera si l'autre côté présente un bras ou non.

Selon une première caractéristique, le dispositif présente une pièce rigide, appelée Support d'étrier présentant une interface compatible pour accueillir le montage d'un étrier de frein standard. Ce Support d'étrier est relié d'une part au Basculeur par une liaison pivot coaxiale à l'Axe de roue, et d'autre part à une Biellette de couple par une liaison pivot, la Biellette de couple étant elle-même reliée au Châssis de fourche par une autre liaison pivot, de telle sorte que les segments reliant ces liaisons et la liaison du Basculeur sur le Châssis de fourche forment un quadrilatère convexe non croisé à un degré de liberté permettant le déplacement de l'Axe de roue dans un plan normal à sa direction. On note que ces liaisons pivot (à l'exception de la liaison entre le Basculeur et le Châssis de fourche) peuvent être remplacées par des liaisons rotules si une des liaisons permet le transfert des efforts « latéraux » (i.e. non compris dans un plan normal à l'Axe de roue) vers le châssis de fourche, i.e. si au moins soit la liaison entre le Basculeur et le Support d'étrier, soit la liaison entre la Biellette de couple et le Châssis de fourche est de type pivot.

Selon une seconde caractéristique le basculeur (selon une architecture mono-bras ou non) est en contact direct avec la Roue, et présente une liaison encastrement démontable avec cette dernière, selon les standards existants. Ainsi, dans le cas d'un basculeur gauche et d'un basculeur droit, ces derniers sont en liaison encastrement par l'intermédiaire de la roue.

Selon un mode particulier de réalisation, l'Amortisseur est lié au Support d'étrier (et non au Basculeur contrairement à l'existant) par une liaison adaptée à son fonctionnement. Le fait de connecter l'Amortisseur au Support d'étrier a plusieurs avantages. Le premier avantage est que le support d'étrier est intrinsèquement une pièce supportant de grands efforts car les efforts de freinage sont souvent dimensionnants pour une fourche. Le Support d'étrier est donc déjà dimensionné et peut supporter les contraintes liées à l'Amortisseur. Le Basculeur est alors soulagé de cette liaison et de ses contraintes associées et peut être simplifié et allégé. On optimise ainsi la masse de chaque pièce. Le seconde avantage est que le Support d'étrier va intrinsèquement plutôt se déplacer en translation circulaire et non en rotation (car le but initial de l'architecture avec Biellette de couple est que l'étrier ne tourne pas pour ne pas transmettre son couple à la cinématique). Ainsi, la liaison avec l'Amortisseur subit très peu de mouvement, et peut être optimisée en remplaçant par exemple un roulement (lourd et cher) par un élément moins lourd, moins cher ou plus compact de type palier, liaison souple (élastomère, « silent bloc », fibre de verre, etc.) ou même par une simple liaison encastrement.

Selon un mode particulier de réalisation, les liaisons sur le Support d'étrier de l'Amortisseur et de la Biellette de couple sont coaxiales. Cela permet de limiter le nombre de pièces et d'augmenter la compacité, de réduire la masse de l'ensemble et le coût, et enfin d'augmenter la fiabilité.

Selon un mode particulier de réalisation, le Support d'étrier est positionné du côté intérieur au Basculeur, i.e. entre le basculeur et la Roue, et de telle sorte que son interface de liaison avec le Basculeur soit située sur un diamètre supérieur ou égale à celui de l'interface de liaison entre la Roue et le Basculeur. Dans cette position, le Support d'étrier est au plus près du disque de frein et au mieux aligné avec l'étrier de frein, ce qui limite les efforts latéraux que pourrait induire le freinage et permet ainsi d'optimiser la forme, la masse et le coût du Support d'étrier. Dans le cas d'une liaison de l'Amortisseur sur le Support d'étrier, cette position permet de plus de limiter le porte-à faux des efforts de compression émanant de la roue et permet une optimisation de forme, de masse et de coût du Basculeur qui récupère alors moins d'effort de torsion. Enfin, cette position du Support d'étier permet d'augmenter la compacité du mécanisme.

Selon un mode particulier de réalisation, le Support d'étrier et/ou l'interface de liaison du Support d'étrier avec le Basculeur présente(nt) une ouverture radiale (par rapport à l'Axe de roue) suffisamment large pour permettre le passage de la Roue et/ou de l'interface de liaison de la Roue avec le Basculeur. Cela permet de garantir le montage/démontage de la roue lorsque celui-ci est radial (i.e. classiquement pour les fourches non mono-bras) tout en conservant la position du Support d'étrier le plus proche possible de la Roue pour optimiser la compacité et la masse de l'ensemble.

Selon un mode particulier de réalisation, le dispositif présente une pièce en forme de demi-lune, appelée Demi-lune permettant de garantir d'une part le montage et la position de la liaison entre le Support d'étrier et le Basculeur, et d'autre part le montage et la position de la roue, le tout sans interaction entre l'un et l'autre. Dans le cas d'un Support d'étrier en position intérieure (i.e. entre la Roue et le Basculeur), la liaison entre ce dernier et le Basculeur se fait par un roulement/palier monté serré dans le Support d'étrier et glissant sans jeu autour de l'interface prévue sur le Basculeur. La Demi-lune, est une pièce cylindrique étroite (de type rondelle épaisse), présentant une ouverture radiale suffisante pour le passage de la roue et/ou de son interface de montage, et une forme complémentaire à la roue et/ou son interface de montage en son centre. Sa face externe (celle dirigée vers le Basculeur) s'appuie d'une part sur le dispositif de liaison entre le Support d'étrier et le Basculeur (le roulement ou le palier) et d'autre part sur la face du Basculeur qui est l'interface entre ce dernier et la Roue et/ou son interface de montage. La demi-lune est montée fixe par rapport au Basculeur (par exemple via des vis). La demi-lune garantit ainsi la position et le non démontage de la liaison entre le Support d'étrier et le Basculeur, mais aussi le montage/démontage et la position de la Roue. Cette solution permet de garantir une compacité maximale du système. De façon simplifiée, la demi-lune peut être remplacée par au minimum deux vis placées de telle sorte que leur contact radial avec la roue ou le dispositif de fixation de la roue assure le bon positionnement de la roue, et que les surfaces d'appui des têtes de vis viennent chevaucher l'interface entre le Basculeur et l'élément de liaison du Support d'étrier avec le Basculeur.

D'après l'invention, le mécanisme selon l'invention est particulièrement adapté à l'utilisation d'un Châssis de fourche de type externe. C'est-à-dire que le Châssis de fourche est creux et accueille entre ses faces intérieures le Basculeur et potentiellement les autres éléments (Amortisseur, Biellette de couple, etc.). Le Châssis de fourche externe permet d'augmenter au maximum ses sections d'inerties, i.e. d'optimiser son rapport masse/rigidité/résistance. Les éléments internes (Basculeur et potentiellement l'Amortisseur, la Biellette de couple, etc.) sont alors protégés des agressions extérieures augmentant ainsi la fiabilité du système. Le Châssis externe doit à minima présenter des ouvertures pour le passage des éléments mobiles externes reliés au Basculeur et autres éléments internes, comme le Support d'étrier, l'étrier de frein et les éléments de la Roue qui traversent son volume. De façon avantageuse, ce Châssis externe présente aussi des accès pour le serrage de l'axe de roue, le montage/démontage d'éléments internes et le réglage de l'Amortisseur. Cette solution présente de plus l'intérêt d'un design intégré et épuré adapté aux véhicules de sport et loisir. Enfin, cette architecture est parfaitement adaptée à l'utilisation de composite ou autres technologies existantes pour la réalisation d'un Châssis de fourche de type monocoque.

Selon un mode particulier de réalisation, le Support d'étrier est tel que l'interface de l'étrier de frein se situe dans l'espace en dessous et/ou devant l'Axe de roue. Ainsi, le système de freinage n'interfère pas avec la liaison principale du Basculeur dont le Châssis de fourche externe en représente la partie la plus large. Le Châssis de fourche peut alors être rapproché au maximum du disque de frein, augmentant la compacité du système et réduisant le porte-à-faux lié aux efforts de la roue. L'ensemble du système est finalement optimisé en termes de masse.

Selon un mode particulier de réalisation, le dispositif selon l'invention est de type mono-bras. Le Basculeur est alors unique et nécessairement placé du côté du système de frein. Le montage de la Roue se fait en axial, ce qui simplifie l'interface de liaison entre le Support d'étrier et le Basculeur (la Demi-lune n'a plus d'utilité). La compacité latérale du système est encore optimisée.

Selon un mode particulier de réalisation, le dispositif utilise un ressort à lame tirée parfaitement adaptée à la cinématique de rotation du Basculeur ou de la Biellette de couple. Le ressort à lame est donc lié par des liaisons adaptées à son fonctionnement d'une part au Châssis de fourche, et d'autre part au Basculeur ou à la Biellette de couple sur une zone située à l'arrière (i.e. vers la roue arrière) de leur liaison avec le Basculeur.

### BREVE DESCRIPTION DES DESSINS

Les dessins annexés illustrent l'invention :
- [Fig 1] représente une vue simplifiée latérale d'un cycle équipé de la suspension avant objet de la présente invention.
- [Fig 2] représente une vue simplifiée de ¾ d'un cycle équipé de la suspension avant objet de la présente invention.
- [Fig 3] représente une vue simplifiée latérale de la présente invention. Le Châssis de fourche y est représenté en coupe afin de visualiser les principaux éléments internes et leurs liaisons/axes y sont repérés.
- [Fig 4] représente un schéma cinématique de l'invention. Les principaux éléments internes et leurs liaisons/axes y sont repérés.
- [Fig 5] représente une vue simplifiée de ¾ avant de la présente invention. Pour plus de visibilité, le Châssis de fourche et les éléments de la roue qui ne sont pas en interaction avec l'invention n'y sont pas représentés.

- [Fig 6] est identique à [Fig 5] mais sans la représentation des éléments standards que sont la Roue et l'Etrier de frein.

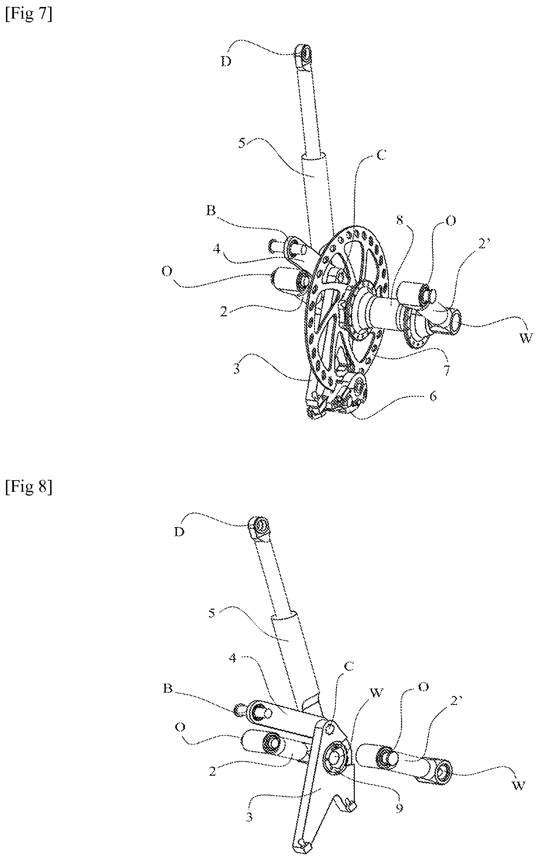

- [Fig 7] représente une vue simplifiée de ¾ arrière de la présente invention. Pour plus de lisibilité, le Châssis de fourche et les éléments de la roue qui ne sont pas en interaction avec l'invention n'y sont pas représentés.
- [Fig 8] est identique à [Fig 7] mais sans la représentation des éléments standards que sont la Roue et l'Etrier de frein.
- [Fig 9] est une coupe frontale au niveau de l'Axe de roue qui permet de visualiser l'agencement latéral des pièces.
- [Fig 10] permet de visualiser la zone d'interface entre la Roue et le Basculeur.
- [Fig 11] permet de visualiser la zone d'interface entre le Basculeur et le Support d'étrier.
- [Fig 12] permet de visualiser l'assemblage entre les Basculeurs et la Roue.
- [Fig 13] permet de visualiser le rôle de positionnement de la Demi-lune.
- [Fig 14] est identique à [Fig 10] avec le remplacement de la Demi-lune par deux vis.
- [Fig 15] est identique à [Fig 13] avec le remplacement de la Demi-lune par deux vis.
- [Fig 16] montre les éléments internes en transparence à travers le Châssis de fourche externe.
- [Fig 17] montre les éléments internes grâce à une coupe du Châssis de fourche.
- [Fig 18] montre la position basse de l'Etrier de frein et le dégagement correspondant du Châssis de fourche.
- [Fig 19] montre en vue arrière, l'agencement du Châssis de fourche au plus proche (compact) du disque de frein grâce à la position basse de l'étrier de frein.
- [Fig 20] montre la position arrière haute de l'Etrier de frein et le décroché correspondant du Châssis de fourche.
- [Fig 21] montre en vue arrière plongeante, l'agencement du Châssis de fourche au plus proche (compact) du disque de frein dans le cas d'une position arrière haute de l'Etrier de frein.
- [Fig 22] est une vue en coupe de face qui montre l'agencement latéral des pièces dans le cas d'un assemblage de type mono-bras.
- [Fig 23] est une vue de ¾ face qui montre en transparence le ressort de type Lame Tirée à travers le Châssis de fourche.
- [Fig 24] est une vue de ¾ face qui montre le ressort de type Lame Tirée grâce à une coupe du Châssis de fourche.
- [Fig 25] est une vue de côté qui montre le ressort de type Lame Tirée grâce à une coupe du Châssis de fourche.

Pour plus de clarté, les éléments identiques ou similaires (c'est à dire ayant la ou les mêmes fonctions) des différentes figures sont repérés par des signes de référence identiques sur l'ensemble des figures. Les pièces sont repérées par des numéros, et leurs liaisons/axes repérés par des lettres majuscules. Les lettres minuscules associées à des numéros représentent des informations liées à la pièce du même numéro.

### DESCRIPTION DETAILLEE

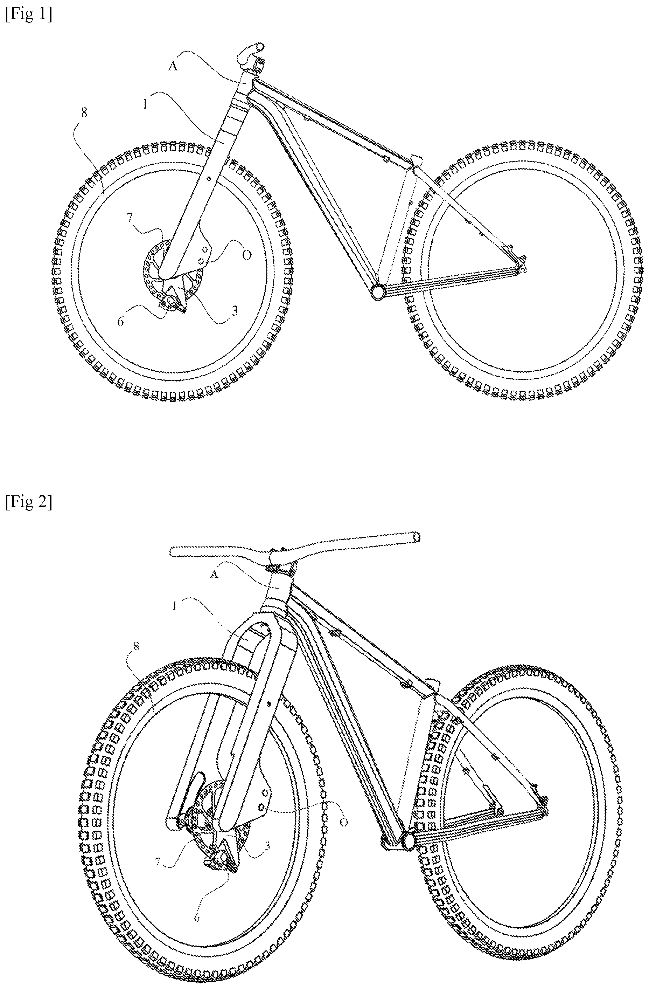

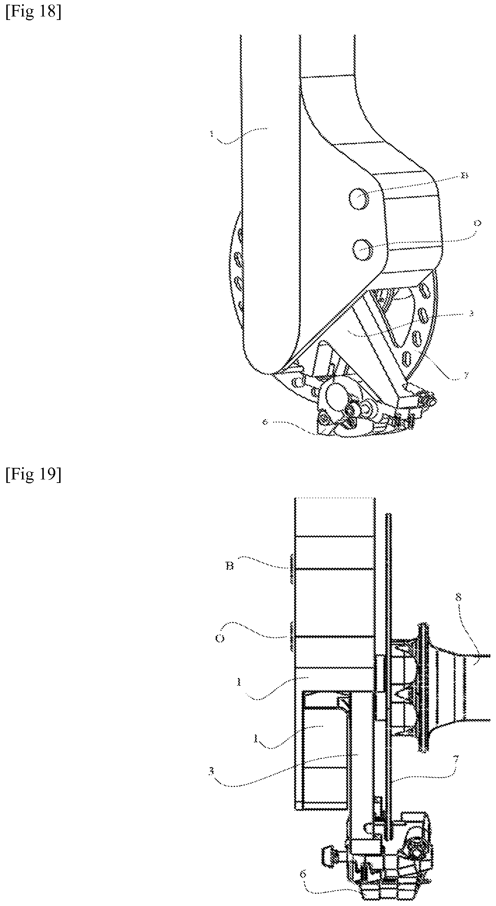

[Fig 1] à [Fig 19] représentent un 1^{er} mode de réalisation de l'invention avec Support d'Etrier interne en position basse, Amortisseur lié directement au Support d'étrier avec liaisons Amortisseur et Biellette de couple coaxiales, Châssis de fourche externe de type monobloc et utilisation de la Demi-lune pour la gestion d'interface Roue/Basculeur/Support d'étrier.

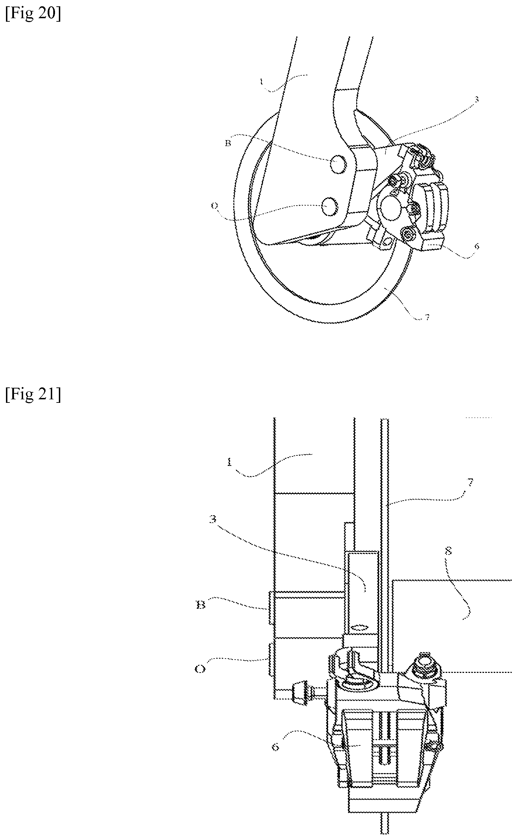

[Fig 20] et [Fig 21] représentent un 2^{ème} mode de réalisation avec l'étrier de frein en position arrière haute.

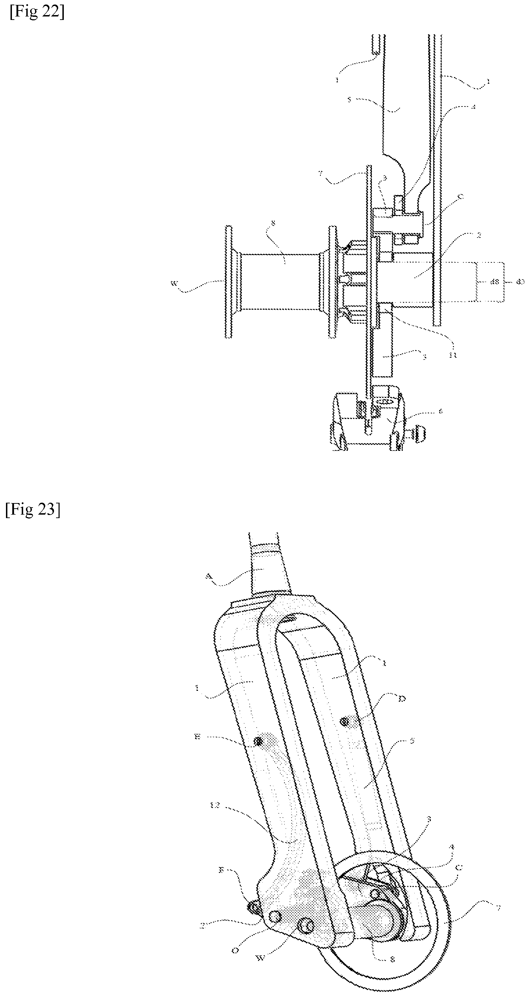

[Fig 22] représente un 3^{ème} mode de réalisation avec une architecture mono-bras.

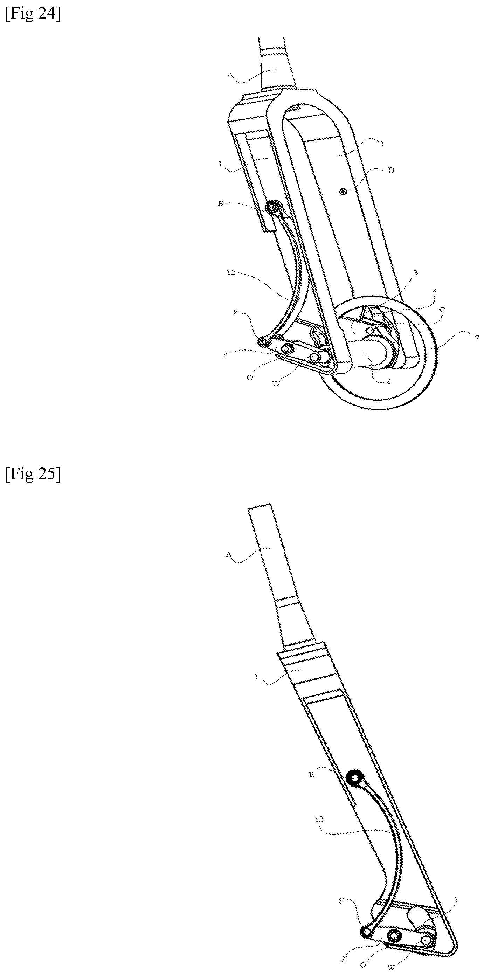

[Fig 23] à [Fig 25] représentent un 4^{ème} mode de réalisation utilisant un ressort à lame tirée.

[Fig 1] et [Fig 2] représentent l'invention montée sur un cycle de type VTT. On y repère les éléments qui y sont interfacés : Le cadre du cycle relié à l'invention par l'intermédiaire de sa douille de direction dont sa liaison pivot sera notée (A) dans la suite du document, la Roue (8) et son Disque de frein (7), et enfin l'Etrier de frein (6). On y repère aussi l'élément central de l'invention, le Support d'Etrier (3). L'Axe (O) est quant à lui l'Axe principal de la cinématique mono-pivot, i.e. que l'Axe de Roue (noté (W) plus tard) décrit un arc de cercle centré sur (O).

Le dispositif selon l'invention présente un Châssis de fourche (1) relié d'une part au cadre du cycle par une liaison pivot standard (A), et d'autre part au Basculeur (2) par une liaison pivot (O).

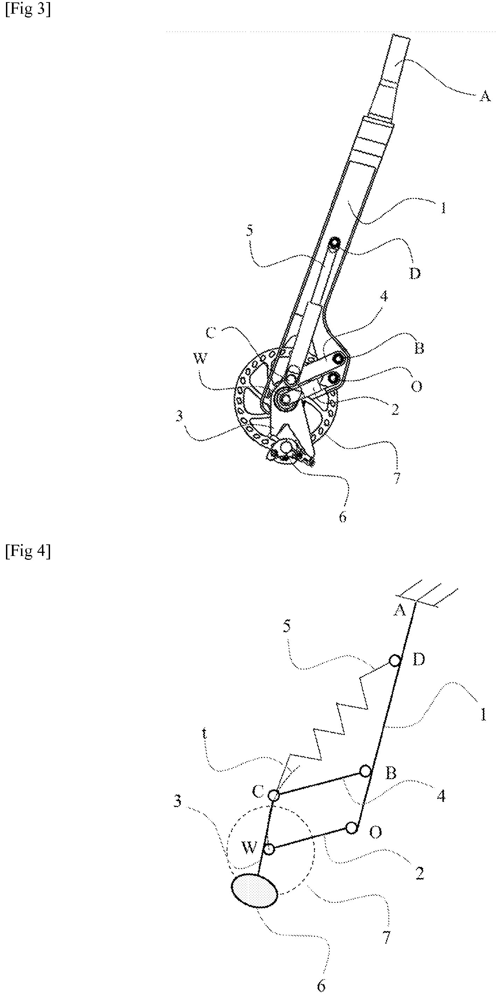

[Fig 4] montre le schéma cinématique d'un mode particulier de réalisation, pour lequel le Support d'étrier (3) est relié d'une part au Basculeur (2) par une liaison pivot (W), coaxiale à l'Axe de roue, et d'autre part à la Biellette de couple (4) par une liaison pivot (C). La Biellette de couple (4) est elle-même reliée au Châssis de fourche (1) par une liaison pivot (B). Pour ce mode de réalisation particulier, le Ressort ou Amortisseur (5) est relié d'une part directement au Support d'étrier (3) par une liaison pivot (C) et d'autre part au Châssis de fourche par une liaison pivot (D). On remarque que pour ce mode de réalisation spécifique, la liaison d'une part entre le Support d'étrier (3) et la Biellette de couple (4), et d'autre part celle entre le Support d'étrier (3) et l'Amortisseur (5) sont coaxiales et donc représentées toutes deux par (C). [Fig 4] montre enfin la Trajectoire de la roue (et donc de son axe (w)) repérée par (t). (t) est un arc de cercle centré en (O).

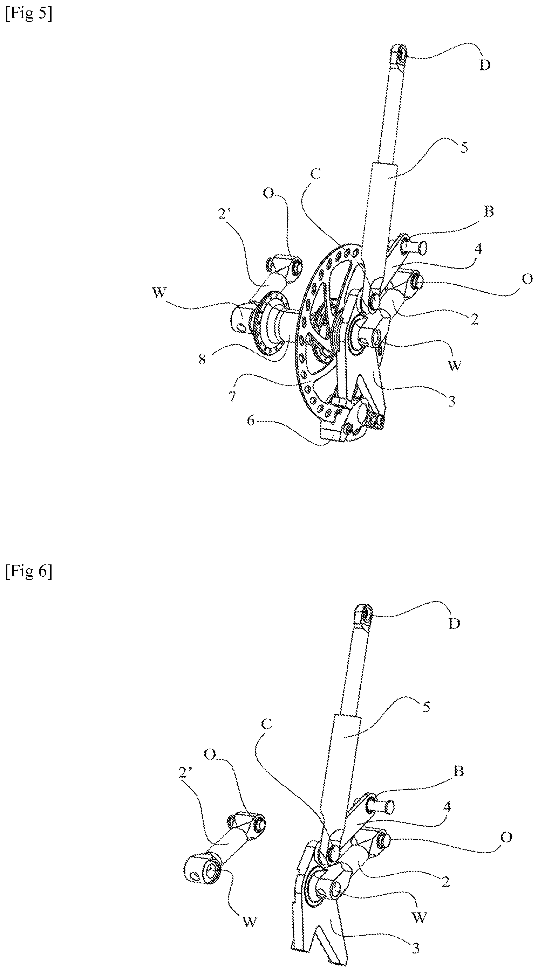

[Fig 5] permet de visualiser le mode de réalisation précédent de ¾ sans le Châssis de fourche (1). On y repère la Roue (8) (les parties non utiles à la compréhension de l'invention n'y sont pas représentées) et son Disque de frein (7). Ce mode de réalisation étant de type « basculeur double » (i.e. non mono-bras et présentant un basculeur en 2 pièces séparées, l'une gauche et l'autre droite), on y repère le Basculeur droit (2'). On remarque que les axes (w) et (O) sont notés de façon identique sur le basculeur gauche (2) et le basculeur droit (2') car ils sont effectivement confondus ; ce qui est nécessaire pour le fonctionnement du mécanisme. En d'autres mots, la cinématique du Basculeur droit (2') est strictement identique à la cinématique du Basculeur gauche (2). Selon ce mode de réalisation, la fonction du basculeur droit (2') est uniquement de participer à la transmission des efforts de guidage entre le Châssis de fourche (1) et la Roue (8) et d'assurer la stabilité géométrique de l'Axe de roue (W). Enfin, [Fig 5] et [Fig 6] permettent de visualiser l'assemblage coaxial (C) de l'Amortisseur (5) et de la Biellette de couple (4) sur le Support d'étrier (3).

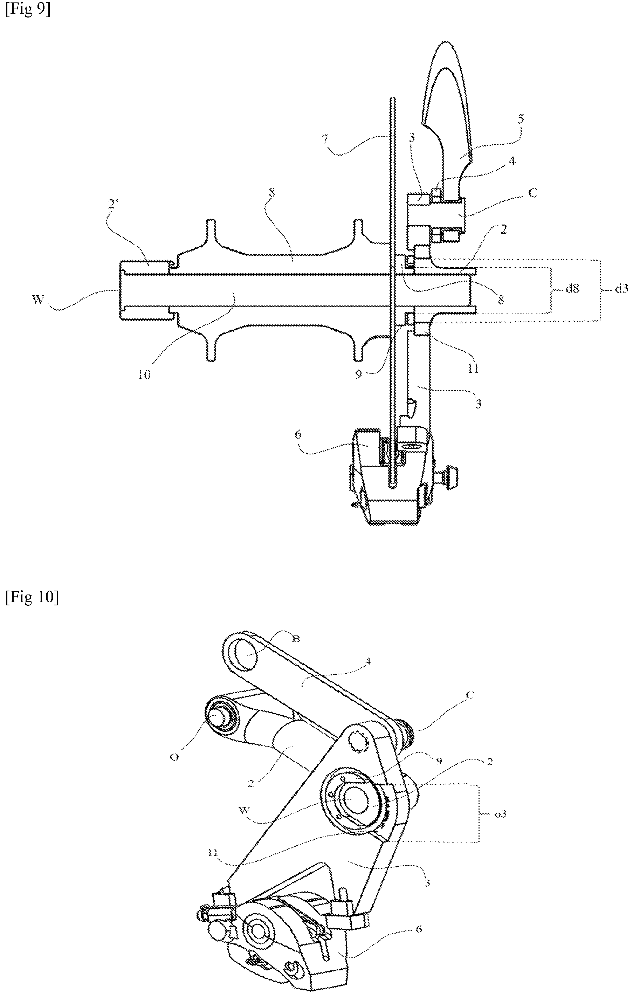

[Fig 9] permet de visualiser un mode d'assemblage des pièces précédentes grâce à des éléments standards de type roulements et paliers. On y repère en particulier l'Amortisseur (5) lié au Support d'étrier (3) via un axe (C) vissé dans le Support d'étrier (3) et équipé d'un palier (non repéré) assurant l'interface de rotation entre l'axe (C) et l'Amortisseur (5). Intercalé entre le Support d'étrier (3) et l'Amortisseur (5), on repère la Biellette de couple (4) dont l'élément assurant son interface avec l'axe (C) est un roulement (non repéré). On a donc bien une double liaison coaxiale. Quant au Support d'étrier (3), on visualise son interface avec le Basculeur (2) assurée par le Roulement (11). Comme précisé dans l'exposé précédent, l'interface de ce Roulement (11) avec le Basculeur (2) est bien située sur un diamètre (d3) supérieur au diamètre (d8) de l'interface de montage entre la Roue (8) et le Basculeur (2). Ainsi, la Roue (8) n'est pas en contact avec le Support d'étrier (3), et elle est bien en contact direct et liaison encastrement avec le Basculeur (2) (cette liaison sera détaillée plus loin). On repère aussi la Demi-lune (9) qui permet d'assurer le positionnement du Roulement (11) mais aussi de la Roue (8). Son fonctionnement sera détaillé plus loin.

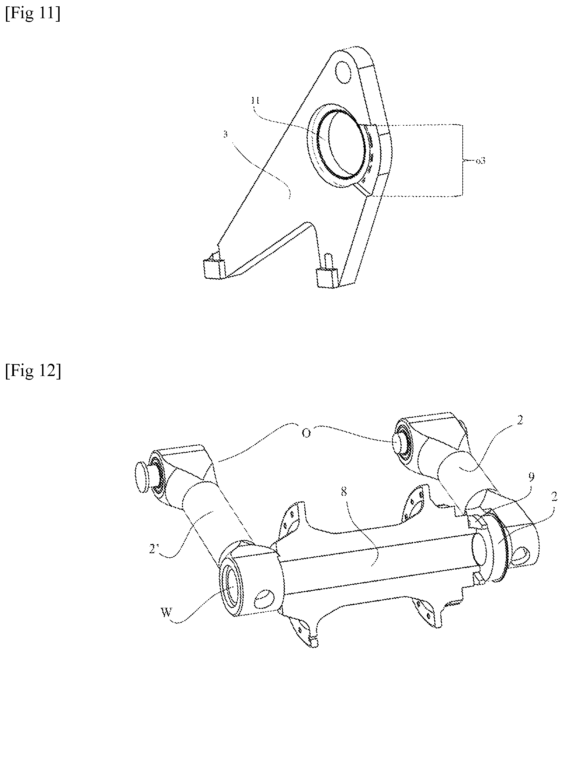

[Fig 9] a montré la compatibilité des diamètres d'interface (d8) et (d3) nécessaire au démontage de la Roue (8). Mais dans le cas d'une recherche de compacité maximale, i.e. en approchant le plus possible le Support d'étrier (3) du Disque de frein (7), ce n'est pas suffisant. Pour cela, le Support d'étrier (3) doit présenter une ouverture (o3) (représentée sur [Fig 10]) pour permettre le passage radial de la Roue (8) lors de son montage ou démontage. [Fig 10] permet de visualiser le lieu d'interface de la Roue (8) avec le Basculeur (2) et la Demi-lune (9). Seule la face centrale de la Demi-lune (9) et la face intérieure du Basculeur (2) sont en contact avec la Roue (8) en fonctionnement. [Fig 11] permet de visualiser l'unique interface du Support d'étrier (autour de cette zone de montage) qui se fait avec le Basculeur (2) via le Roulement (11). Le Support d'étrier (3) n'a aucun contact avec ni la Roue (8) ni la Demi-lune (9).

[Fig 12] montre comment la Roue (8) est reliée avec une liaison de type encastrement avec le Basculeur (2). Dans le cas présent, les deux Basculeurs (2) et (2') sont reliés à la Roue (8) par des appuis plans puis l'axe (W) (non représenté) qui traverse les deux Basculeurs (2) et (2') et la Roue (8) et qui assure donc la liaison axiale. Par frottement, le serrage de l'axe (W) finit de supprimer tout degré de liberté. L'ensemble des deux Basculeurs (2) et (2') et de la Roue (8) forme donc une seule et même pièce d'un point de vue cinématique.

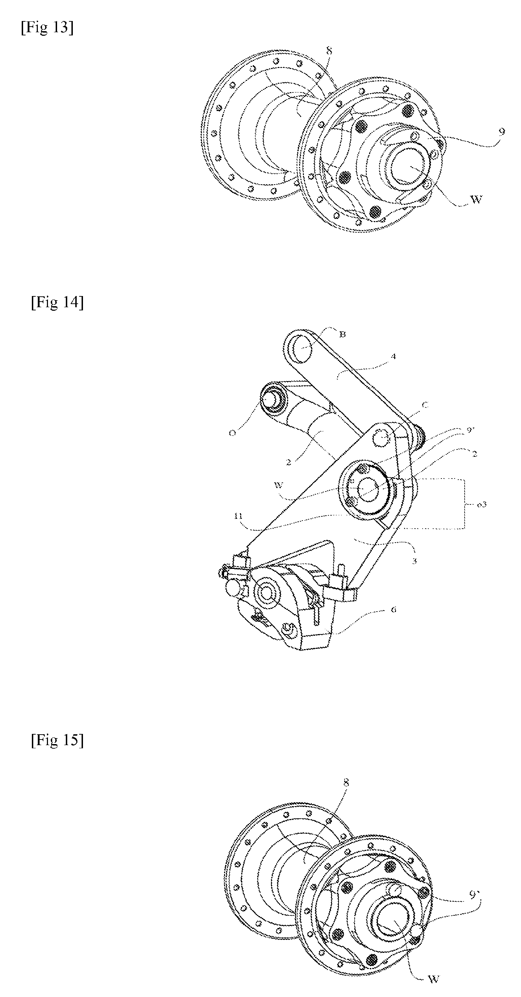

[Fig 13] précise l'interface entre la Roue (8) et la Demi-lune (9) et explique ainsi la mise en position de la Roue (8) grâce à ce système. [Fig 14] et [Fig 15] montrent qu'il est aisé de remplacer la Demi-lune (9) par deux vis (9') pour réaliser la même fonction mais de façon plus simple.

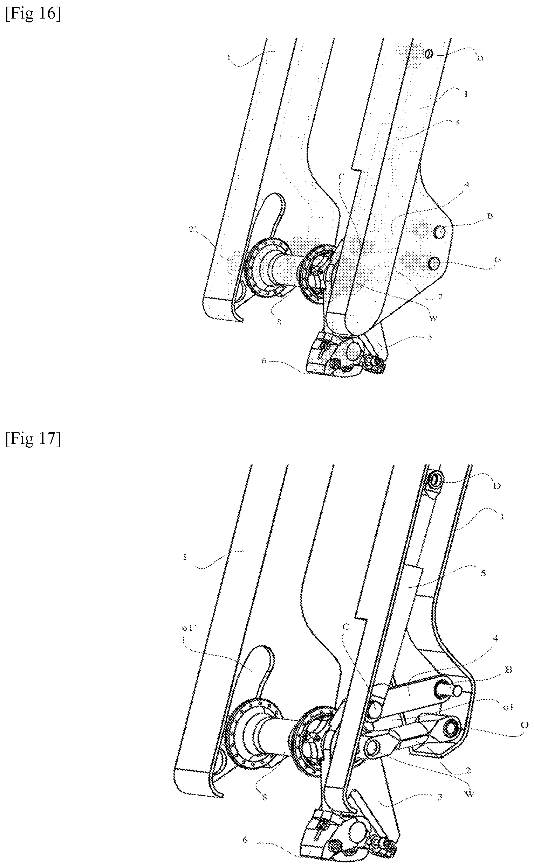

[Fig 16] et [Fig 17] montrent comment l'ensemble des éléments de l'invention peut être intégré à un Châssis externe (1). On entend par « Châssis externe » une pièce creuse accueillant les pièces principales tel le Basculeur (2) sur ses faces intérieures. Ici, l'ensemble des éléments (excepté le Support d'étrier (3) sont intégrés dans le Châssis externe (1). Ainsi, les différentes pièces, et notamment les roulements, paliers et joints de l'Amortisseur, sont protégés des éléments extérieurs (chocs, UV, eau, etc.). L'autre avantage de ce mode de réalisation est d'optimiser le rapport masse/rigidité du Châssis de fourche (1). En effet, les pièces creuses de type monocoque sont connues pour leur grande rigidité et légèreté grâce à l'optimisation de leurs sections d'inerties. On remarque que le Châssis de fourche (1) présente nécessairement des ouvertures (o1) et (o1') permettant le passage des éléments mobiles ou pour l'accès à différentes pièces internes lors du montage ou du réglage. On visualise ce type d'ouverture sur [Fig 23] au niveau de l'Axe de roue (w).

Selon le mode de réalisation décrit ci-dessus, l'étrier de frein est placé en position basse afin d'optimiser la compacité latérale de l'ensemble. [Fig 18] montre le dégagement nécessaire sous le Châssis de fourche (1) pour le passage du Support d'étrier (3) et de l'étrier (6), et [Fig 19] montre que cette position permet de rapprocher au maximum la face interne (i.e. vers la Roue (8)) du Châssis de fourche (1) et la face interne du Support d'étrier (3) du Disque de frein (7) ; ces deux faces étant alors coplanaires.

[Fig 20] et [Fig 21] montrent un autre mode de réalisation pour lequel l'étrier de frein est placé en position arrière et haute. On y voit qu'aucun dégagement sous le Châssis de fourche (3) n'est nécessaire, ce qui est un avantage pour sa structure, mais que la présence du Support d'étrier (3) entre le Disque (7) et le Châssis (1) (en fait plus précisément la liaison (O) du Châssis (1)) limite la compacité.

[Fig 22] montre un mode de réalisation du type mono-bras. Cela permet de se dédouaner des problématiques de Montage/démontage de la Roue (8), son installation nécessitant uniquement des déplacements axiaux. Dans ce cas, la fonction de type Demi-lune n'est plus nécessaire et la compacité latérale peut être maximale. On repère sur cette figure que les diamètres d'interface (d8) et (d3) de la Roue (8) et du Support d'étrier (3) peuvent être strictement identiques.

[Fig 23] et [Fig 24] montrent un mode de réalisation utilisant un ressort de type Lame tirée (12), ici monté du côté opposé au frein. Les Ressorts de type Lame tirée (12) présentent de grands avantages (progressivité, légèreté, fiabilité, etc.) mais ne peuvent généralement pas être utilisés sur des cinématiques classiques car ils doivent être tirés et non comprimés. La cinématique à basculeur de la présente invention est parfaitement adaptée à l'utilisation de ce type de ressort. Sur le mode de réalisation présent, la Lame tirée (12) liée d'une part au Châssis (1) par une liaison pivot (ou rotule) (E), et d'autre part au Basculeur (2') par une liaison pivot (ou rotule) (F) située à l'arrière (i.e. vers la roue arrière) de la liaison (O). Comme on peut le constater sur ces figures, la Lame (12) peut être totalement ou partiellement intégrée au Châssis (1).

La présente invention (et ses différents modes de réalisation) est particulièrement adaptée pour la réalisation d'une suspension avant de cycle, vélo, moto, véhicules à deux roues ou équivalents.

### LISTE DES SIGNES DE REFERENCE

- (1) Châssis de fourche
- (2), (2') Basculeur(s)
- (3) Support d'étrier
- (4) Biellette de couple
- (5) Amortisseur (ou Ressort, i.e. l'élément dissipatif et/ou élastique)
- (6) Etrier de frein
- (7) Disque de frein
- (8) Roue
- (9) Demi-lune
- (9') Vis ayant la fonction de Demi-lune
- (10) Axe de roue (la pièce nécessaire au montage de la roue)
- (11) Roulement d'interface entre le Support d'étrier (3) et le Basculeur (2)
- (12) Lame tirée
- (A) Liaison entre (1) et le cadre du véhicule
- (B) Liaison entre (1) et (4)
- (C) Liaison entre (3) et (4)
- (D) Liaison entre (1) et (5)
- (E) Liaison entre (1) et (12)
- (F) Liaison entre (2) ou (2') et (12)
- (O) Liaison entre (1) et (2)
- (W) Liaison entre (2) et (3) ou représentation de l'Axe de roue
- (t) Trajectoire de la Roue en (W)
- (d3) Diamètre d'interface entre (3) et (2)
- (d8) Diamètre d'interface entre (8) et (2)
- (o3) Ouverture sur la pièce (3)
- (o1) et (o1') Ouvertures sur la pièce (1)

## Revendications

1. Dispositif de suspension d'une Roue avant directrice (8) pour véhicule à deux roues ou plus, comprenant un Châssis de fourche (1) relié à la colonne de direction du véhicule par une liaison pivot standard qui assure le degré de liberté nécessaire à la transmission des mouvements de guidage du véhicule, un Basculeur (2) relié d'une part au Châssis de fourche (1) par une liaison pivot dont l'axe de rotation est parallèle à l'axe de rotation de la Roue (8) et située à l'arrière de ce dernier, i.e. vers la roue arrière, et d'autre part à la Roue (8) selon les principes d'assemblage standards, un système dissipatif et/ou élastique (5) installé selon les principes du métier entre toutes parties en mouvement relatif du dispositif, et un Support d'étrier (3) présentant une interface compatible avec le montage d'un Etrier de frein (6) standard, et lié d'une part au Basculeur (2) par une liaison pivot coaxiale à l'Axe de la Roue (8), et d'autre part à une Biellette de couple (4) par une liaison pivot ou rotule, la Biellette de couple (4) étant elle-même reliée au Châssis de fourche (1) par une liaison pivot ou rotule, de telle sorte que les segments reliant ces liaisons et la liaison du Basculeur (2) sur le Châssis de fourche (1) forment un quadrilatère convexe non croisé à un degré de liberté permettant le déplacement de l'Axe de la Roue (8) dans un plan normal à sa direction, **caractérisé en ce que** :
• le Châssis de fourche (1) est creux et accueille entre ses faces intérieures a minima le Basculeur (2) et potentiellement les autres éléments du dispositif,
• le Châssis de fourche (1) présente a minima des ouvertures pour le passage des éléments mobiles qui lui sont externes et reliés au Basculeur (2) ou à d'autres éléments internes.

2. Dispositif de suspension, selon la revendication 1, **caractérisé en ce que** le système dissipatif et/ou élastique (5) est lié directement au Support d'étrier (3) par une liaison de type pivot, rotule, flexible ou encastrement adaptée à son fonctionnement.

3. Dispositif de suspension, selon la revendication 2, **caractérisé en ce que** les liaisons sur le Support d'étrier (3) du système dissipatif et/ou élastique (5) et de la Biellette de couple (4) sont coaxiales.

4. Dispositif de suspension, selon l'une des revendications précédentes, **caractérisé en ce que** le Support d'étrier (3) est positionné du côté intérieur au Basculeur (2), i.e. entre le Basculeur (2) et la Roue (8), et de telle sorte que son interface de liaison avec le Basculeur (2) soit située sur un diamètre supérieur ou égale à celui de l'interface de liaison entre la Roue (8) et le Basculeur (2).

5. Dispositif de suspension, selon l'une des revendications précédentes, **caractérisé en ce que** le Support d'étrier (3) et/ou l'interface de liaison du Support d'étrier (3) avec le Basculeur (2) présente/nt une ouverture radiale,
par rapport à l'Axe de la Roue (8), suffisamment large pour permettre le passage de la Roue (8) et/ou de l'interface de liaison de la Roue (8) avec le Basculeur (2).

6. Dispositif de suspension, selon les revendications 4 ou 5, **caractérisé en ce que** la liaison entre le Support d'étrier (3) et le Basculeur (2) est réalisée via un roulement ou palier (11) monté serré dans le Support d'étrier (3) et glissant sans jeu autour de l'interface prévue sur le Basculeur (2).

7. Dispositif de suspension, selon la revendication 6, **caractérisé en ce que**
• le dispositif présente une Demi-lune (9) de forme cylindrique étroite de type de rondelle épaisse, présentant une ouverture radiale suffisante pour le passage de la Roue (8) et/ou de son interface de montage, et une forme complémentaire à la Roue (8) et/ou son interface de montage en son centre qui permet d'assurer la mise en position de la Roue (8) lors de son montage,
• la face externe de la Demi-lune (9) ,i.e. celle dirigée vers le Basculeur (2 ) s'appuie d'une part sur le roulement ou palier (11) qui réalise la liaison entre le Support d'étrier (3) et le Basculeur (2) et d'autre part sur la face du Basculeur (2) qui est l'interface entre ce dernier et la Roue (8) et/ou son interface de montage,
• la Demi-lune (9) est montée fixe par rapport au Basculeur (2).

8. Dispositif de suspension, selon l'une des revendications précédentes,
**caractérisé en ce que** :
• le Châssis de fourche (1) présente a minima des ouvertures pour l'accès à l'Axe de roue (10) et son démontage ainsi que pour l'accès aux réglages du système dissipatif et/ou élastique (5) s'ils existent.

9. Dispositif de suspension, selon l'une des revendications précédentes, **caractérisé en ce que** le Support d'étrier (3) est tel que l'interface de l'étrier de frein (6) se situe dans l'espace en dessous et/ou devant l'Axe de la Roue (8).

10. Dispositif de suspension, selon l'une des revendications précédentes, **caractérisé en ce que** le dispositif utilise un ressort de type Lame tirée (12) lié par des liaisons adaptées à son fonctionnement, d'une part au Châssis de fourche (1), et d'autre part au Basculeur (2) ou à la Biellette de couple (4) sur une zone située à l'arrière, i.e. vers la roue arrière, de leur liaison avec le Châssis de fourche (1).

## Patentansprüche

1. Aufhängungsvorrichtung für ein gelenktes Vorderrad (8) für ein Fahrzeug mit zwei oder mehr Rädern, umfassend einen Gabelrahmen (1), der über eine Standard-Schwenkverbindung mit der Lenksäule des Fahrzeugs verbunden ist, die den für die Übertragung der Lenkbewegungen des Fahrzeugs erforderlichen Freiheitsgrad gewährleistet, eine Kippvorrichtung (2), die einerseits über eine Schwenkverbindung mit dem Gabelrahmen (1), deren Drehachse parallel zur Drehachse des Rades (8) verläuft und sich hinter diesem, d. h. zum Hinterrad hin, befindet, und andererseits mit dem Rad (8) nach den Standard-Montageprinzipien verbunden ist, ein dissipatives und/oder elastisches System (5), das nach den Prinzipien des Fachgebiets zwischen allen sich relativ bewegenden Teilen der Vorrichtung installiert wird, und einen Bremssattelträger (3), der eine Schnittstelle aufweist, die mit der Montage eines Standard-Bremssattels (6) kompatibel ist, und einerseits mit der Kippvorrichtung (2) über eine zur Radachse (8) koaxiale Schwenkverbindung und andererseits mit einer Drehmomentstange (4) über eine Dreh- oder Gelenkverbindung verbunden ist, wobei die Drehmomentstange (4) selbst mit dem Gabelrahmen (1) über eine Dreh- oder Gelenkverbindung verbunden ist, so dass die Segmente, die diese Verbindungen und die Verbindung der Kippvorrichtung (2) mit dem Gabelrahmen (1) verbinden, ein nicht gekreuztes konvexes Viereck mit einem Freiheitsgrad bilden, das die Bewegung der Radachse (8) in einer Ebene senkrecht zu ihrer Richtung ermöglicht, **dadurch gekennzeichnet, dass**:
• der Gabelrahmen (1) hohl ist und zwischen seinen Innenseiten mindestens die Kippvorrichtung (2) und möglicherweise die anderen Elemente der Vorrichtung aufnimmt,
• der Gabelrahmen (1) mindestens Öffnungen für den Durchgang der beweglichen Elemente aufweist, die außen an ihn angebracht und mit der Kippvorrichtung (2) oder anderen internen Elementen verbunden sind.

2. Aufhängungsvorrichtung nach Anspruch 1, **dadurch gekennzeichnet, dass** das dissipative und/oder elastische System (5) direkt mit dem Bremssattelträger (3) über eine an seine Funktion angepasste Schwenk-, Gelenk-, flexible oder eingebettete Verbindung verbunden ist.

3. Aufhängungsvorrichtung nach Anspruch 2, **dadurch gekennzeichnet, dass** die Verbindungen am Bremssattelträger (3) des dissipativen und/oder elastischen Systems (5) und der Drehmomentstange (4) koaxial sind.

4. Aufhängungsvorrichtung nach einem der vorhergehenden Ansprüche, **dadurch gekennzeichnet, dass** der Bremssattelträger (3) auf der Innenseite der Kippvorrichtung (2), d. h. zwischen der Kippvorrichtung (2) und dem Rad (8), positioniert ist, und so dass seine Verbindungsschnittstelle mit der Kippvorrichtung (2) auf einem Durchmesser liegt, der größer oder gleich dem der Verbindungsschnittstelle zwischen dem Rad (8) und der Kippvorrichtung (2) ist.

5. Aufhängungsvorrichtung nach einem der vorhergehenden Ansprüche, **dadurch gekennzeichnet, dass** der Bremssattelträger (3) und/oder die Verbindungsschnittstelle des Bremssattelträgers (3) mit der Kippvorrichtung (2) eine radiale Öffnung in Bezug auf die Achse des Rades (8) aufweist/aufweisen, die groß genug ist, um den Durchgang des Rades (8) und/oder der Verbindungsschnittstelle des Rades (8) mit der Kippvorrichtung (2) zu ermöglichen.

6. Aufhängevorrichtung nach den Ansprüchen 4 oder 5, **dadurch gekennzeichnet, dass** die Verbindung zwischen dem Bremssattelträger (3) und der Kippvorrichtung (2) über eine Rollvorrichtung oder ein Lager (11) hergestellt wird, die beziehungsweise das fest im Bremssattelträger (3) montiert ist und ohne Spiel um die an der Kippvorrichtung (2) vorgesehene Schnittstelle gleitet.

7. Aufhängungsvorrichtung nach Anspruch 6, **dadurch gekennzeichnet, dass**
• die Vorrichtung einen Halbmond (9) mit schmaler zylindrischer Form vom Typ einer dicken Unterlegscheibe aufweist, der eine radiale Öffnung, die für den Durchgang des Rades (8) und/oder seiner Montageschnittstelle ausreicht, und eine Form aufweist, die komplementär zum Rad (8) und/oder zu seiner Montageschnittstelle in seiner Mitte ist und es ermöglicht, die Positionierung des Rades (8) bei seiner Montage zu gewährleisten,
• die Außenseite des Halbmonds (9), d. h. diejenige, die zur Kippvorrichtung (2) zeigt,
einerseits an der Rollvorrichtung oder dem Lager (11), die beziehungsweise das die Verbindung zwischen dem Bremssattelträger (3) und der Kippvorrichtung (2) herstellt, und andererseits an der Seite der Kippvorrichtung (2) anliegt, die die Schnittstelle zwischen dieser und dem Rad (8) und/oder seiner Montageschnittstelle ist,
• der Halbmond (9) fest an der Kippvorrichtung (2) montiert ist.

8. Aufhängungsvorrichtung nach einem der vorhergehenden Ansprüche, **dadurch gekennzeichnet, dass**:
• der Gabelrahmen (1) mindestens Öffnungen für den Zugang zur Radachse (10) und deren Demontage sowie für den Zugang zu den Einstellungen des dissipativen und/oder elastischen Systems (5) aufweist, falls diese vorhanden sind.

9. Aufhängungsvorrichtung nach einem der vorhergehenden Ansprüche, **dadurch gekennzeichnet, dass** der Bremssattelträger (3) so beschaffen ist, dass sich die Schnittstelle des Bremssattels (6) im Raum unterhalb und/oder vor der Radachse (8) befindet.

10. Aufhängungsvorrichtung nach einem der vorhergehenden Ansprüche, **dadurch gekennzeichnet, dass** die Vorrichtung eine Feder vom Typ gezogene Blattfeder (12) verwendet, die durch an ihre Funktion angepasste Verbindungen einerseits mit dem Gabelrahmen (1) und andererseits mit der Kippvorrichtung (2) oder der Drehmomentstange (4) in einem Bereich, der sich hinter, d. h. in Richtung des Hinterrades, ihrer Verbindung mit dem Gabelrahmen (1) befindet, verbunden ist.

## Claims

1. Suspension device of a Front Steering Wheel (8) for a vehicle with two wheels or more, comprising a Fork Frame (1) connected to the steering column of the vehicle by a standard pivot connection that provides the degree of freedom necessary for the transmission of the movements guiding the vehicle, a Rocker (2) connected on the one hand to the Fork Frame (1) by a pivot link the axis of rotation of which is parallel to the axis of rotation of the Wheel (8) and located at the rear of the latter, i.e. towards the rear wheel, and on the other hand to the Wheel (8) according to standard assembly principles, a dissipative and/or elastic system (5) installed according to the principles of the art between all parts of the device moving relative to one another, and a Calliper Support (3) having an interface compatible with the mounting of a standard brake calliper (6), and connected on the one hand to the Rocker (2) by a pivot connection coaxial with the Axle of the Wheel (8), and on the other hand to a Torque Link (4) by a pivot or ball joint connection, the Torque Link (4) being itself connected to the Fork Frame (1) by a pivot or ball joint connection, so that the segments connecting these connections and the connection of the Rocker (2) on the Fork Frame (1) form a non-crossed convex quadrilateral with a degree of freedom allowing the movement of the Axle of the Wheel (8) in a plane normal to its direction, **characterised in that**:
• the Fork Frame (1) is hollow and accommodates between its inner faces at least the Rocker (2) and potentially the other elements of the device,
• the Fork Frame (1) has at least openings for the passage of the movable elements which are external to it and connected to the Rocker (2) or to other internal elements.

2. Suspension device according to claim 1, **characterised in that** the dissipative and/or elastic system (5) is directly connected to the calliper support (3) by a pivot, ball joint, flexible or embedding type connection adapted to its operation.

3. Suspension device according to claim 2, **characterised in that** the connections on the Calliper Support (3) of the dissipative and/or elastic system (5) and of the Torque Link (4) are coaxial.

4. Suspension device according to one of the preceding claims, **characterised in that** the Calliper Support (3) is positioned on the inner side of the Rocker (2), i.e. between the Rocker (2) and the wheel (8), and such that the interface of connection thereof with the rocker (2) is located on a diameter larger than or equal to that of the connection interface between the wheel (8) and the rocker (2).

5. Suspension device according to one of the preceding claims, **characterised in that** the Calliper Support (3) and/or the interface connecting the Calliper Support (3) with the Rocker (2) has/have a radial opening, with respect to the Axle of the Wheel (8), wide enough to allow passage of the Wheel (8) and/or the interface connecting the Wheel (8) with the Rocker (2).

6. Suspension device according to claims 4 or 5, **characterised in that** the connection between the Calliper Support (3) and the Rocker (2) is implemented via a bearing or bushing (11) mounted tightly in the Calliper Support (3) and sliding without play around the interface provided on the Rocker (2).

7. Suspension device according to claim 6, **characterised in that**
• the device has a Half-moon (9) of narrow cylindrical shape of the thick washer type, having a sufficient radial opening for the passage of the Wheel (8) and/or of its mounting interface, and a shape complementary to the Wheel (8) and/or its mounting interface at its centre which makes it possible to position the Wheel (8) during its mounting,
• the outer face of the Half-moon (9), i.e. that facing the Rocker (2), bears on the one hand on the bearing or bushing (11) which establishes the connection between the Calliper Support (3) and the Rocker (2) and on the other hand by the face of the rocker (2) which is the interface between the latter and the Wheel (8) and/or its mounting interface,
• the Half-moon (9) is fixed in relation to the Rocker (2).

8. Suspension device according to one of the preceding claims, **characterised in that**:
• the Fork Frame (1) has at least openings for access to the Wheel Axle (10) and removal of the same as well as for access to the adjustments of the dissipative and/or elastic system (5) if they exist.

9. Suspension device according to one of the preceding claims, **characterised in that** the Calliper Support (3) is such that the interface of the brake calliper (6) is located in the space below and/or in front of the Axle of the Wheel (8).

10. Suspension device according to one of the preceding claims, **characterised in that** the device uses a spring of the Pulled Leaf (12) type connected by connections adapted to its operation, on the one hand to the Fork Frame (1), and on the other hand to the Rocker (2) or to the Torque Link (4) on an area located at the rear, i.e. towards the rear wheel, of their connection with the Fork Frame (1).
